# EUROPÄISCHE PATENTSCHRIFT

(11) **EP 1 106 979 B1**
(45) Veröffentlichungstag und Bekanntmachung des Hinweises auf die Patenterteilung: **14.11.2001**
(21) Anmeldenummer: 99115789.2
(22) Anmeldetag: 11.08.1999
(51) Int. Cl.: G01J 3/12

(54) **Anordnung zur gleichzeitigen Analyse mehrerer optischer Leitungen**
Device for the simultaneous analysis of multiple optical channels
Dispositif pour l'analyse simultanée d'une multiplicité de canaux optiques

(43) Veröffentlichungstag der Anmeldung: 13.06.2001
(73) Patentinhaber: Acterna Eningen GmbH, 72800 Eningen (DE)
(72) Erfinder: Benzel, Karl, 72581 Dettingen (DE); Conzelmann, Andreas, 72800 Eningen (DE); Fuhrmann, Thomas, 72800 Eningen (DE); Löcklin, Eberhard, 72766 Reutlingen (DE)
(74) Vertreter: Klocke, Peter, Dipl.-Ing.

(56) Entgegenhaltungen:
- EP-A- 0 540 966
- US-A- 3 069 967
- US-A- 4 676 597
- US-A- 4 718 764

## Beschreibung

Die vorliegende Erfindung betrifft optische Spektrumanalysatoren mit hoher Genauigkeit in einer neuartigen Anordnung zur Durchführung von mehreren gleichzeitigen Messungen an mehreren Signalquellen.

Im Bereich der optischen Nachrichtentechnik werden optische Spektrumanalysatoren eingesetzt, deren Haupteinsatzgebiete die Charakterisierung der optischen Komponenten und die Überwachung der optischen Übertragungsstrecken sind. Optische Spektrumanalysatoren, die nach dem Littman-Design mit einem Eckprisma als Umlenkspiegel und einer gemeinsamen Linse für das eingekoppelte und ausgekoppelte Licht aufweisen, haben einige Vorteile, wie Kompaktheit und robuste Arbeitsweise. Ein großer Nachteil ist die hohe Rückreflexion in die Eingangsfaser, die bei der Messung von optischen Komponenten oder optischen Übertragungssystemen zu Fehlmessungen führen kann. Ein derartiger optischer Spektrumanalysator ist beispielsweise in der US 5 886 785 offenbart.

Ein weiterer Nachteil konventioneller optischer Spektrumanalysatoren, wie sie beispielsweise aus der EP 0 540 966 B1 bekannt sind, liegt darin, dass nur das Spektrum einer Quelle gemessen werden kann. Sind Messungen von mehreren Quellen nötig, wie beispielsweise an unterschiedlichen Glasfasern eines Übertragungssystems oder vor und hinter einem optischen Bauteil, so ist umständliches und zeitintensives Umstecken der Faser nötig oder es ist der Einbau eines teuren optischen Schalters erforderlich.

Der vorliegenden Erfindung liegt daher die Aufgabe zugrunde, eine Möglichkeit vorzuschlagen, die die gleichzeitige Messung mehrerer optischer Spektren erlaubt.

Diese Aufgabe wird erfindungsgemäß durch Verwendung einer optischen Anordnung in einem optischen Spektrumanalysator gemäß den Merkmalen des Anspruchs 1 gelöst. Weitere vorteilhafte Ausgestaltungen sind den rückbezogenen Unteransprüchen zu entnehmen.

Gemäß der Erfindung wird eine optische Anordnung mit einer Einrichtung zum Einkoppeln mehrerer Lichtstrahlen, einem Kollimator zur Erzeugung paralleler Lichtbündel aus den von der Einrichtung zum Einkoppeln ankommenden divergierenden Lichtstrahlen, einer Einrichtung zum Beugen der auftreffenden Lichtstrahlen entlang einer Dispersionsachse, eine Umlenkeinrichtung zum Leiten der dispergierten Lichtstrahlen mit Versatz gegenüber den von der Dispersionseinrichtung kommenden Lichtstrahlen ein zweites Mal zu der Dispersionseinrichtung, und einer Fokussiereinrichtung zum Fokussieren der von der Dispersionseinrichtung auftreffenden Lichtstrahlen auf eine Einrichtung zum Auskoppeln der Lichtstrahlen in einem optischen Spektumanalysator verwendet. Für diese optische Anordnung nach dem Fuhrmann-Design werden senkrecht zur Dispersionsachse eines Beugungsgitters (als Dispersionseinrichtung) angeordnete Eingangs- und Ausgangsöffnungen als Einkoppel- bzw. Auskoppeleinrichtungen zur gleichzeitigen Analyse mehrerer optischer Signalpfade verwendet. Dabei werden die über die mehreren Eingangsöffnungen eintretenden, unabhängig voneinander die Anordnung durchlaufenden Lichtstrahlen über die Ausgangsöffnungen wieder ausgekoppelt und die augenblickliche ausgekoppelten optischen Leistungen bei einer bestimmten Wellenlänge der Lichtstrahlen gleichzeitig gemessen. Die Auswahl der zu analysierenden Wellenlänge erfolgt gemäß der dem Fachmann bekannten Methoden, beispielsweise in Abhängigkeit von der Stellung des Beugungsgitters oder der Umlenkeinrichtung, durch Positionsveränderung der Eingangs- bzw. Ausgangsöffnungen oder durch Einführen einer Zwischenbildebene in dem optischen Spektrumanalysator, in der eine Blende zur Wellenlängenselektion verschoben wird. An den Eingangs- und Ausgangsöffnungen sind beispielsweise mehrere Glasfasern in einer Linie angeordnet, wobei durch einen genau definierten Abstand zwischen allen Ein- und Auskoppelöffnungen ein Versatz senkrecht zur Dispersionsrichtung des Lichtes vorgesehen ist, damit kein Licht zwischen den einzelnen Lichtstrahlen am Ausgangsspalt überkoppelt. Das austretende Licht jedes einzelnen Lichtstrahles wird durch einen Kollimator auf ein reflektierendes Dispersionsgitter gestrahlt. Anstelle des Kollimators und des Beugungsgitters kann auch ein konkaves Beugungsgitter (Hohlspiegel) verwendet werden. Vor dem optischen Spektrumanalysator oder im optischen Spektrumanalysator kann eine Vorrichtung zur Kompensation der Polarisationsabhängigkeit des optischen Spektrumanalysators angeordnet sein. Das von dem Beugungsgitter kommende Licht wird über eine Umlenkeinrichtung, beispielsweise ein 90° Umlenkprisma, auf das Beugungsgitter zurück reflektiert und dabei versetzt, so dass es ein zweites Mal auf das Beugungsgitter, jedoch an einer anderen Stelle, nämlich räumlich versetzt, auf das Beugungsgitter trifft und dort dispergiert wird. Über einer Fokussiereinrichtung, beispielsweise eine zweite Linse, werden anschließend die einzelnen Lichtstrahlen auf die Auskoppeleinrichtungen fokussiert und können über Glasfasern zu einem Photodektor o.ä. weitergeleitet werden. Als Eingangsfasern und als Ausgangsfasern können Singlemode-Fasern verwendet werden. Auch ist es möglich, als Ausgangsfasern Multimode-Fasern zu verwenden.

Zur Wellenlängenabstimmung kann entweder das Beugungsgitter oder die Umlenkeinrichtung in bekannter Art und Weise gedreht werden. Dazu ist die jeweilige Einrichtung mit einem Motor mit Positionssensor verbunden, der über einen Computer und einen Digital/Analog-Wandler gesteuert wird. Das Signal des Positionssensors wird ausgelesen und über einen A/D-Wandler an den Computer gegeben. Dieser kann aus dem Positionssignal und der Kalibrierung des Spektrumanalysators die augenblicklich abgetastete Wellenlänge feststellen.

Da durch Änderung der Temperatur der optischen Anordnung sich die physikalischen Parameter der vorhandenen Werkstoffe ändern und zu Wellenlängenfehler führen, die für die Messung in Wellenlängenmultiplex-Übertragungssystemen (WDM-Übertragungssystemen) nicht den Anforderungen entsprechen, wird gemäß einer weiteren bevorzugten Ausführungsform ein Signalpfad als Referenzsignal mit genau bekanntem Wellenlängenspektrum zur Kalibrierung des optischen Spektrumanalysators und Abgleich der Wellenlängendrift verwendet. Es wird dann das Licht mit bekannter spektraler Charakteristik eingespeist und das Spektrum gleichzeitig mit den Messkanälen - ohne Unterbrechung des Messvorgangs - gemessen. Aufgrund der vorhandenen Positionsinformation des Motors und des in der Wellenlänge genau bekannten Referenzspektrums kann der Rechner das Gerät parallel zum Messvorgang neu kalibrieren. Die Wellenlänge des Referenzsignals kann dabei im optischen Spektralbereich des zu messenden Signals liegen. Im Gegensatz zu anderen bekannten Verfahren ist es nicht nötig, die Positionsinformation zum Referenzspektrum zu speichern und im folgenden Durchlauf auszuwerten.

Die Erfindung hat den Vorteil, dass gleichzeitig mehrere Spektren vermessen und mehrere Glasfasern gleichzeitig überwacht werden können, was bisher den kostenintensiven Einsatz mehrerer optischer Spektrumanalysatoren erforderlich machte. Durch die Erfindung sind Messungen an mehreren Quellen gleichzeitig möglich, wobei die aufwendigen und kostenintensiven Teile, wie Gitter, Antrieb oder Mechanik für die gleichzeitigen Messungen nur einmal erforderlich sind. Da räumlich versetzte Auskoppelpunkte verwendet werden, wird auch eine sehr geringe Rückreflexion in die Einkoppelpunkte errreicht. Zusätzlich ist bei laufendem Betrieb eine Kalibrierung des optischen Spektrumanalysators zum Ausgleich der Wellenlängendrift, beispielsweise aufgrund von Erwärmung, möglich.

Weitere vorteilhafte Ausgestaltungen werden nachfolgend anhand eines Ausführungsbeispiels in Verbindung mit den begleitenden Zeichnungen näher erläutert. Es stellen dar:
- Fig.1: ein Blockdiagramm einer Ausführungsform eines optischen Spektrumanalysators und
- Fig.2: die optische Anordnung in einem optischen Spektrumanalysator gemäß Fig.1.

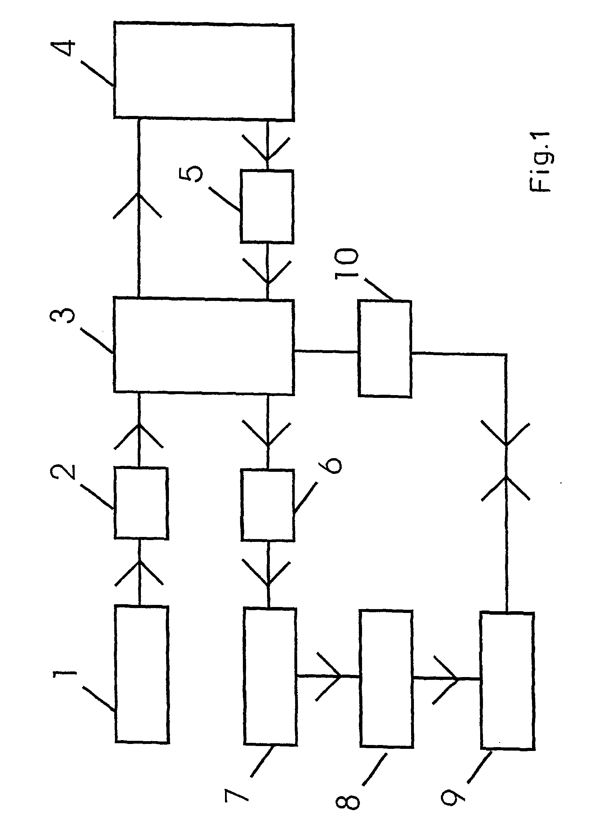

In der Figur 1 sind die Strahlenbündel durch ihre Hauptstrahlen dargestellt. Gemäß der Figur1 besteht der optische Spektrumanalysator unter Verwendung einer Strahl-Anordnung nach dem Fuhrmann--Design aus einer Einkoppeleinrichtung 1, einem Beugungsgitter 3, einer Reflexionseinrichtung 4 und einer Auskoppeleinrichtung 7. Die Einkoppeleinrichtung 1 besteht aus übereinander angeordneten Eingangsöffnungen, über die mehrere Lichtstrahlen unabhängig voneinander eintreten. Diese werden einem Kollimator 2 zugeführt, der das Bündel von Lichtstrahlen auf ein Beugungsgitter 3 führt. Nach der Dispersion werden die Lichtstrahlen über die Reflexionseinrichtung 4, die als Umlenkprisma ausgebildet ist und einen Höhenversatz der Lichtstrahlen bewirkt, geführt. Zur Polarisationskompensation werden die einzelnen Lichtstrahlen anschließend durch eine Einrichtung zur Polarisationskompensation 5, beispielsweise λ/2-Platte, geschickt. Damit wird die polarisationsabhängige Beugungseffizienz des Beugungsgitters 3 kompensiert, in dem die Hauptachsen der Polarisation vertauscht werden und so ein Lichtstrahl, dessen E-Vektor beim ersten Gitterdurchlauf parallel zu den Gittergruben ist, beim zweiten Gitterdurchlauf senkrecht zu den Gittergruben ist (und umgekehrt). Nach dem zweiten Durchlauf der Lichtstrahlen über das Beugungsgitter 3 werden die Lichtstrahlen mittels einer geeigneten Fokussiereinrichtung 6 auf eine Auskoppeleinrichtung 7 fokussiert. Die Auskoppeleinrichtung 7 weist ebenfalls übereinander angeordnete Auskoppelöffnungen für die einzelnen Lichtstrahlen auf. Die Einkopplung bzw. Auskopplung erfolgt mittels Lichtleitfasern. Alternativ kann die Auskopplung des Lichtes gewünschter Wellenlänge direkt auf eine Photodiode für jeden Signalpfad erfolgen.

Die Auskoppeleinrichtung 7 ist mit geeigneten Fotodetektoren 8 verbunden, die die empfangenen Strahlen detektieren und entsprechende Signale zu einem Computer 9 übertragen. Der Spektrumanalysator weist außerdem eine Einrichtung 10 zum Einstellen der Drehbewegung des Beugungsgitters 3 auf, die mit dem Computer 9 verbunden ist, so dass dieser in Abhängigkeit von der Position und der der Position zugeordneten Wellenlänge die augenblicklich gemessene Wellenlänge ermitteln kann. Der Computer 9 erhält die einzelnen empfangenen Meßsignale gleichzeitig und kann daraus die entsprechenden Meßdaten ermitteln und gleichzeitig anzeigen.

Ein Signalpfad durch das Gerät wird dazu benutzt, ein Referenzsignal mit genau bekannter Wellenlänge oder genau bekanntem Spektrum zu beaufschlagen, das gleichzeitig mit den anderen unbekannten und zu messenden Lichtstrahlen gemessen wird. Damit kann während der Messung der optische Spektrumanalysator in der Wellenlänge kalibriert werden.

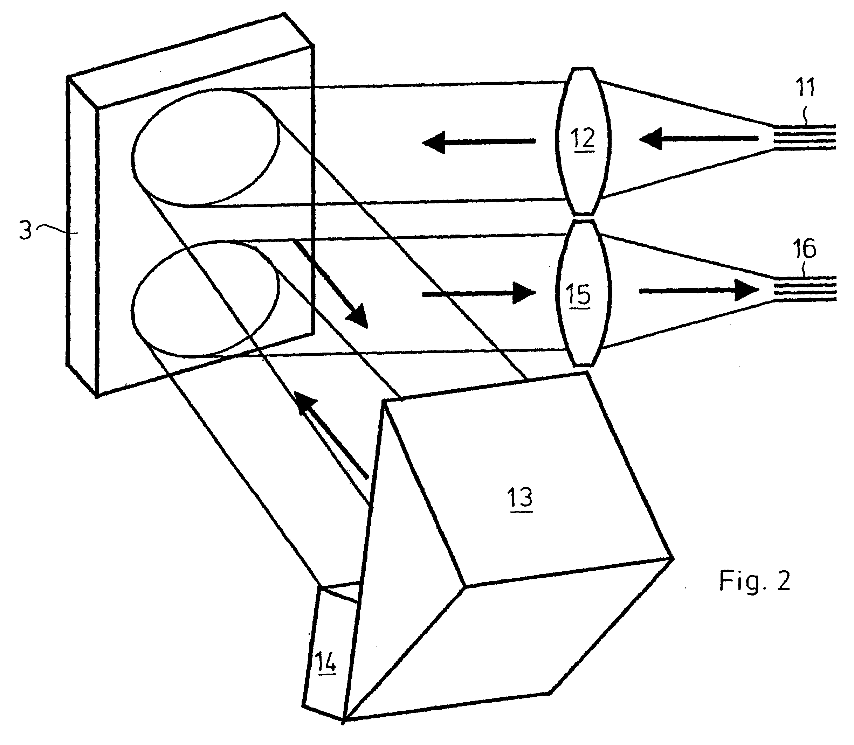

In dem Ausführungsbeispiel gemäß Fig.2 sind vier übereinander angeordnete Lichtleitfasern 11 vorgesehen. Als Fasern werden Singlemode Standardfasern für den Wellenlängenbereich von 1550nm verwendet, deren Kerndurchmesser 9µm beträgt. Der Abstand zwishen den Fasern senkrecht zur Dispersionsachse beträgt aufgrund der Vermeidung von Überkopplung 200µm. Zur weiteren Reduzierung der Rückreflexion können die Enden der Lichtleitfasern mit einer geeigneten Antireflex-Beschichtung behandelt werden oder es können die Enden schräg unter einem Winkel von z.B. 8° poliert werden. Die Lichtstrahlen aus den Lichtleitfasern 11 werden, aufgefächert, ohne gegenseitige Beeinflussung auf eine Linse 12 gerichtet, die diese Lichtstrahlen auf das reflektierende Beugungsgitter 3 kollimiert. Aufgrund des großen Wellenlängenbereichs des optischen Spektrumanalysators von 1280 bis 1650nm wird eine achromatische Linse verwendet, die im gesamten Wellenlängenbereich beugungsbegrenzt ist. Das Beugungsgitter 3 ist ein Plangitter mit 900 Linien/mm und weist eine Verspiegelungsschicht aus Gold auf. Die einzelnen Lichtstrahlen werden in bekannter Art und Weise dispergiert, auf ein 90° Umlenkprisma 13 mit einer nur die Hälfte des Umlenkprismas abdeckenden λ/2-Platte 14 einer kombinierten Umlenkeinrichtung 4 und Polarisationseinrichtung 5 gelenkt. Anschließend werden die Lichtstrahlen ein zweites Mal von dem Beugungsgitter 3 dispergiert und auf eine zweite Linse 15 gelenkt, die die einzelnen Lichtstrahlen auf wiederum vier übereinander angeordnete Lichtleitfasern 16 fokussiert. Durch die in der Höhe versetzten Ein- und Auskoppelpunkte wird eine sehr geringe Rückreflexion in die jeweilige Eingangsfaser erreicht.

Die Lichtstrahlen treffen aus den Lichtleitfasern 11 auf den Kollimator 12 und werden dort zu Parallelstrahlen. Aufgrund der unterschiedlich positionierten Einkoppelpunkte sind die einzelnen Parallelstrahlen gegeneinander leicht gekippt (ca. 0,3°). Diese Lichtstrahlen treffen auf das Beugungsgitter 3 und werden dort auf das Umlenkprisma dispergiert. Im 90°-Prisma werden die Lichtstrahlen mit einem Höhenversatz reflektiert, wobei die Winkelverkippung zwischen den einzelnen Lichtstrahlen konstant bleibt. Auf dem Weg zum zweiten Durchlauf über das Beugungsgitter3 durchlaufen sie die λ/2-Platte 14. In der Fokussiereinrichtung 15 werden die im Winkel zueinander verkippten Parallelstrahlen fokussiert, wobei die Reihenfolge in der Höhe die gleiche ist wie am Eingang. Bei einem breitbandigen Licht im optischen Spektrumanalysator entstehen vier parallele Lichtstreifen, wobei auf jedem Punkt eines Streifens eine andere Wellenlänge angeordnet ist. Die Auskopplung des Lichtes mit der gewünschten Wellenlänge erfolgt über die geeigneten Ausgangsaperturen und Lichtleitfasern 16.

## Patentansprüche

1. Verwendung einer optischen Anordnung mit
- einer Einrichtung (1) zum Einkoppeln mehrer Lichtstrahlen,
- einem Kollimator (2) zur Erzeugung paralleler Lichtbündel aus den von der Einrichtung (1) zum Einkoppeln ankommenden divergierenden Lichtstrahlen,
- einer Einrichtung (3) zum Dispergieren der auftreffenden Lichtstrahlen entlang einer Dispersionsachse,
- eine Umlenkeinrichtung (4) um die dispergierten Lichtstrahlen mit Versatz gegenüber den von der Dispersionseinrichtung (3) kommenden Lichtstrahlen ein zweites Mal zu der Dispersionseinrichtung (3) zu Leiten,
- einer Fokussiereinrichtung (6) zum Fokussieren der umgelenkten und von der Dispersionseinrichtung (3) auftreffenden Lichtstrahlen auf eine Einrichtung (7) zum Auskoppeln der Lichtstrahlen,
in einem optischen Spektrumanalysator mit mehreren mit einem Versatz senkrecht zur Dispersionsachse der Dispersionseinrichtung (3) angeordneten Eingangs- und Ausgangsöffnungen (11) zur gleichzeitigen Analyse mehrerer optischer Spektren, indem die über die mehreren Eingangsöffnungen eintretenden Lichtstrahlen unabhängig voneinander die Anordnung durchlaufen und über die Ausgangsöffnungen (16) austreten und die optischen Leistungen der ausgekoppelten Wellenlängen der Lichtstrahlen gleichzeitig gemessen werden.

2. Verwendung nach Anspruch 1, bei der in einem Signalpfad ein Referenzsignal mit genau bekanntem optischem Spektrum zur Kalibrierung des optischen Spektrumanalysators ein- bzw. ausgekoppelt wird.

3. Verwendung nach Anspruch 2, bei der die Kalibrierung des optischen Spektrumanalysators während des Messvorgangs in den anderen Signalpfaden durchgeführt wird.

4. Verwendung nach einem der vorangegangenen Ansprüche, bei der eine Kompensation der Polarisationsabhängigkeit der Beugungseffizienz des Gitters durchgeführt wird.

5. Verwendung nach einem der vorangegangenen Ansprüche, bei der das ausgekoppelte Licht jedes Kanals mittels eines Fotosensors (8) erfaßt, anschließend digitalisiert und einem Computer (9) zugeführt wird, und von diesem aus diesen Signalen in Abhängigkeit von der Stellung eines Beugungsgitters (3) oder der Umlenkeinrichtung (4) die optische Leistung der augenblicklich ausgekoppelten Wellenlänge jedes Signalpfades ermittelt wird.

## Claims

1. The use of an optical arrangement comprising
- a device (1) for coupling several light rays;
- a collimator (2) for generating parallel bundles of light from the diverging light rays arriving from the device (1) for coupling;
- a device (3) for dispersing the impinging light rays along a dispersion axis;
- a deviation device (4) in order to guide the dispersed light rays offset in relation to the light rays coming from the dispersion device (3), for a second time to the dispersion device (3);
- a focusing device (6) for focusing the deviated light rays impinging from the dispersion device (3), onto a device (7) for decoupling the light rays,
in an optical spectrum analyser with several inlet- and outlet apertures (11), arranged offset, perpendicular to the dispersion axis of the dispersion device (3), for simultaneous analysis of several optical spectra, in that the light rays entering via the inlet apertures, of which there are several, independently of each other pass through the arrangement and exit via the outlet apertures (16) and in that the optical performance of the decoupled wavelengths of the light rays is measured simultaneously.

2. The use according to claim 1, in which in a signal path a reference signal with precisely known optical spectrum is coupled or decoupled for calibrating the optical spectrum analysers.

3. The use according to claim 2, in which calibration of the optical spectrum analyser takes place during the measuring process in the other signal paths.

4. The use according to one of the preceding claims, in which compensation of the polarisation dependence of the diffraction efficiency of the grating is carried out.

5. The use according to one of the preceding claims, in which the decoupled light of each channel is acquired via a photo sensor (8), is subsequently digitised and fed to a computer (9) and from said computer, depending on the position of a diffraction grating (3) or of the deviation device (4), from these signals the optical performance of the currently decoupled wavelength of each signal path is determined.

## Revendications

1. Usage d'un agencement optique comprenant
- un dispositif (1) pour l'injection de plusieurs rayons lumineux,
- un collimateur (2) pour la génération de faisceaux lumineux parallèles à partir des rayons lumineux divergents provenant du dispositif d'injection (1),
- un dispositif (3) pour la dispersion des rayons lumineux incidents le long d'un axe de dispersion,
- un dispositif de déviation (4) pour amener les rayons lumineux dispersés une seconde fois vers le dispositif de dispersion (3) et en décalage par rapport aux rayons lumineux provenant de ce dernier,
- un dispositif de focalisation (6) destiné à focaliser les rayons lumineux incidents déviés et provenant du dispositif de dispersion (3) vers un dispositif (7) servant à l'extraction des rayons lumineux,
dans un analyseur de spectre optique pourvu d'une pluralité d'orifices d'entrée et de sortie (11) disposés en décalage perpendiculairement à l'axe de dispersion du dispositif de dispersion (3) et destinés à l'analyse simultanée de plusieurs spectres optiques, cette analyse étant réalisée en ce que les rayons lumineux arrivant par la pluralité d'orifices d'entrée traversent l'agencement indépendamment les uns des autres avant de ressortir par les orifices de sortie (16) et en ce que les puissances optiques des longueurs d'onde extraites des rayons lumineux sont mesurées simultanément.

2. Usage selon la revendication 1 pour lequel, dans un cheminement de signal, un signal de référence dont le spectre optique est connu exactement est injecté ou extrait à des fins de calibrage de l'analyseur de spectre optique.

3. Usage selon la revendication 2 pour lequel le calibrage de l'analyseur de spectre optique est effectué pendant l'opération de mesure sur les autres cheminements de signal.

4. Usage selon l'une des revendications précédentes pour lequel on compense la dépendance que présente l'efficacité de diffraction du réseau par rapport à la polarisation.

5. Usage selon l'une des revendications précédentes pour lequel la lumière extraite pour chaque canal est détectée au moyen d'un photocapteur (8), numérisée et envoyée à un ordinateur (9) lequel calcule, à partir de ces signaux et en fonction de la position d'un réseau de diffraction (3) ou du dispositif de déviation (4), la puissance optique de la longueur d'onde actuellement extraite pour chaque cheminement de signal.
